# EUROPEAN PATENT SPECIFICATION

(11) **EP 1 161 155 B1**
(45) Date of publication and mention of the grant of the patent: **23.07.2003**
(21) Application number: 00911487.7
(22) Date of filing: 10.03.2000
(51) Int. Cl.: A23L 1/0522, A23L 1/164, A23L 1/217

(54) **INGREDIENTS FOR EXPANDED FOODS**
ZUTATEN FÜR AUFGEPUFFTE NAHRUNGSMITTEL
INGREDIENTS POUR ALIMENTS EXPANSES

(30) Priority: 15.03.1999 EP 99200796
(43) Date of publication of application: 12.12.2001
(73) Proprietor: Coöperatieve Verkoop- en Productievereniging van Aardappelmeel en Derivaten 'AVEBE' B.A., NL-9641 JA Veendam (NL)
(72) Inventor: SIEPEL, Ugo, NL-9642 PB Veendam (NL); BUWALDA, Pieter, Lykle, NL-9718 MJ Groningen (NL)
(74) Representative: Prins, Adrianus Willem
(86) International application number: NL0000165
(87) International publication number: WO00054606

(56) References cited:
- EP-A- 0 304 401
- EP-A- 0 565 386
- US-A- 4 634 596
- US-A- 5 523 106
- US-A- 5 652 010
- HOVENKAMP-HERMELINK J H M ET AL: "ISOLATION OF AN AMYLOSE-FREE STARCH MUTANT OF THE POTATO (SOLANUM TUBEROSUM L.)" THEORETICAL AND APPLIED GENETICS, vol. 75, no. 1, 1 December 1987 (1987-12-01), pages 217-221, XP000610709 ISSN: 0040-5752 cited in the application

## Description

The invention relates to expansion of foodstuff, in particular to the production of expanded food items such as snacks.

Expanded foods are well-known to every consumer. Their highly aerated texture is appreciated in toast, snacks, crackers and a multitude of other products that are often eaten snack wise. In general, expansion of a certain product is achieved by heating a composition such as a dough to a temperature above its glass transition temperature and then expanding it, for example by applying a gas which blows the plasticised mass to a foam. This foam is subsequently brought to below its glass transition temperature whereby the expanded dough settles resulting in a stable, glassy or crispy and expanded foam.

Perhaps the best known example of such an expanded product is popcorn. The corn is heated well above the glass transition temperature of the starch. At this temperature water boils vigorously and the resulting steam blows the corn kernel to a foam (the popping). Since water is a very efficient plasticiser for starches, the release of water results in a sharp increase in the glass transition temperature. As a result the popcorn is frozen into its well-appreciated tender and crispy form.

Apart from flavour, texture is the second most important criterion in determining the acceptability and attractiveness of a food product. For many products the crispiness and extent of expansion mainly govern the sensation of texture. Examples of expanded products are extruded snacks, crackers, cookies, coated nuts, Japanese style snacks, some types of confectionery, dry roasted nuts, chip-like products, etc. In general, such snacks are best appreciated when they are most expanded, i.e. contain the most air and are most brittle. Often such snacks are also described as being light and crispy.

As already mentioned glass transition temperature and the influence of water on this temperature can govern the expansion. All starches have their own typical glass transition at a fixed moisture content as is described in J-.L. Jane et al, "Effects of starch chemical structures on gelatinisation and pasting properties" in Zywnosc Tecnologica Jakosc, 4(17) 63-71, Cracow 1998. Apart from these factors the viscosity and the visco-elasticity are also important factors in governing the foaming properties of plasticised materials.

Degrees of crispiness and expansion are often achieved by varying process conditions and formula aspects. For example in snack preparations often a mixture of starches, flour and a (most times limited) amount of water is prepared. A process step is carried out such as extrusion, sheeting or coating in order to bring the dry or semi-dry mix, dough or batter into a certain shape or condition. Final process steps can be drying, baking or frying, through which expansion is obtained as described above.

Yet another typical example of expanded foodstuff are puffed snacks. Farinaceous materials are formed into pellets with a distinct shape. Heating the pellets for instance through frying or with a puffing gun results in the desired snack. Also, fabricated corn or potato chips are an important factor in the market. In U.S. Patent 3,576,647 a process is described in which the preparation of chip-like expanded products is described. In U.S. Patent 5,500,240 the application of pregelatinised waxy maize starch for the production of (potato) chip like products is described. The machinabillity of the transient dough is rather good, resulting in low fat chip-like products. No remarks with respect to expansion are made. However, the application of cereal starches in potato or other non-cereal snacks may lead to off taste products.

For foodstuff, it is in general desirable that a starch be bland or neutral in flavour. The starches generally having the most neutral taste are non-cereal, such as tuber- or root-type, starches, such as potato or tapioca, when compared to starches such as corn, wheat, rice, sorghum, waxy maize and waxy sorghum, which, when incorporated into food, give some undesirable flavour (peculiar to the starch) to the food. These off-flavours have been described by some individuals as 'woody', 'corny', 'starchey', 'bitey' or 'chalkey', and these flavours often come out most poignant after heat treatment, amongst others because cereal starches contain considerable amounts of lipids and proteins, when compared to non-cereal starches.

It is an object of the present invention to provide expanded foodstuff, and methods of obtaining these, having improved expansion characteristics, containing more air or being even more light and/or crispy over comparable expanded foodstuffs that have been traditionally on the market. It is a further object of the present invention to provide expanded foodstuff wherein the starch used has a unpronounced or neutral taste.

The invention provides a method for obtaining an expanded foodstuff having improved expansion characteristics comprising preparing a composition, such as a dough, coating mix, pre-mix, etc, at least comprising a non-cereal amylopectin starch, heating at least part of said composition to a temperature above its glass transition temperature, i.e. expanding said heated composition and letting it cool to below said glass transition temperature. As referred to herein, non-cereal amylopectin starch is a starch isolated from non-cereals, such as potato tubers or tapioca and having an amylopectin content more than 90 wt.%, preferably of at least 95 wt.%, and preferably at least 98 wt.%, or even at least 99 wt.%, based on dry substance.

Due the presence of the non-cereal amylopectin starch, i.e. a starch having an amylopectin content of at least 90 weight percent based on dry substance of said starch in said composition, an improved expansion is obtained. In a preferred embodiment, a method according to the invention is provided wherein said starch is derived from a potato.

A composition for use in preparing an expanded foodstuff comprises at least a non-cereal amylopectin starch having an amylopectin content of at least 90 wt.% based upon dry substance. Such a composition is for example a dough, (tempura or fritter) batter, mix or ready-to-use pre-mix to which for example only water need to be added for preparing a dough or batter, said composition optionally containing other starches, carbohydrates, fats, proteins, flavours, salts, or other food components. It is preferred that at least 10%, more preferably at least 25% of the starch fraction in said expanded products comprises non-cereal amylopectine starch, be it native non-cereal amylopectin starch or a non-cereal amylopectin starch derivative, to provide for the expansion characteristics desired for the type of expanded food product.

The invention also provides an expanded foodstuff comprising a non-cereal amylopectin starch having an amylopectin content of at least 90 wt.% based upon dry Substance Examples of such foodstuff as provided by the invention are extruded snacks, crackers, cookies, doughnuts, chip-like products, Japanese style snacks, some types of confectionery, or coated foodstuff such as coated nuts, dry roasted nuts, fritter or tempura type products, etc., or food coatings, such as snack coatings, bread coatings, French fries coatings, and pre-mixes therefor, comprising a non-cereal amylopectin starch, particularly those comprising starch or starch granules containing more than 90 or 95%, and usually more than 98% of amylopectin.

The present invention in particular relates to expanded products in which amylopectin starch or derivatives thereof are applied as to impart expansion properties. It has been provided by the invention that use of non-cereal amylopectin starch, and non-cereal amylopectin starch derivatives for the preparation of expanded foodstuffs induces unexpected high expansion when compared to other starches. Most starches typically consist of granules in which two types of glucose polymers are present. These are amylose (15-35 wt.% on dry substance) and amylopectin (65-85 wt.% an dry substance). Amylose consists of unbranched or slightly branched molecules having an average degree of polymerisation of 100 to 5000, depending on the starch type. Amylopectin consists of very large, highly branched molecules having an average degree of polymerisation of 1,000,000 or more. The commercially most important starch types (maize starch, potato starch, wheat starch and tapioca starch) contain 15 to 30 wt.% amylose. For some cereal types, such as barley, maize, millet, wheat, milo, rice and sorghum, varieties are known of which the starch granules nearly completely consist of amylopectin. Calculated as weight percent on dry substance (wt.%), these starch granules contain more than 95%, and usually more than 98% of amylopectin. The amylose content of these cereal starch granules is therefor less than 5%, and usually less than 2%. The above cereal varieties are also referred to as waxy cereal grains, and the amylopectin starch granules isolated therefrom as waxy cereal starches.

In contrast with the different cereals, starch granules of non-cereal starches, such as root and tuber varieties, that (nearly) exclusively consist of amylopectin are traditionally not known in nature. For instance, potato starch granules isolated from potato tubers usually contain about 20% amylose and 80 % amylopectin. During the past 10 years, however, successful èfforts have been made to cultivate by genetic modification non-cereals, such as potato plants which, for example in the potato tubers, form starch granules consisting for more than 95 wt.% of amylopectin. It has even been found feasible to produce potato tubers comprising substantially only amylopectin.

In the formation of starch granules, different enzymes are catalytically active. Of these enzymes, the granule bound starch synthase (GBSS) is involved in the formation of amylose. The presence of the GBSS enzyme depends an the activity of genes encoding for said GBSS enzyme. Elimination or inhibition of the expression of these specific genes results in the production of the GBSS enzyme being prevented or limited. The elimination of these genes can be realised by genetic modification of potato plant material or by selection for plants having a recessive mutation, preferably in homozygous form, of said gene. An example of the latter is the amylose-free mutant of the potato (amf) of which the starch substantially only contains amylopectin through a recessive mutation in the GBSS gene. This mutation technique is described in, inter alia, J.H.M. Hovenkamp-Hermelink et al., "Isolation of amylose-free starch mutant of the potato (Solanum. tuberosum L.)", Theor. Appl. Gent., (1987), 75:217-221" and E. Jacobsen et. al., "Introduction of an amylose-free (amf), mutant- into breeding of cultivated potato, Solanum tuberosum L., Euphytica, (1991),: 53:247-253.

Elimination or inhibition of the expression of the GBSS gene in the plant is also possible by using so-called antisense inhibition. Genetic modification of for example potato is described in R.G.F. Visser et al., "Inhibition of the expression of the gene for granule-bound starch synthase in potato by antisense constructs", Mol. Gen. Genet.,(1991), 225:289-296. By using genetic modification, it has been found possible to cultivate and breed non-cereal roots and tubers, for instance potato, yam, or cassava (Patent South Africa 97/4383), of which the starch granules. contain little or no amylose. As referred to herein, non-cereal amylopectin starch is the starch isolated from non-cereals such as potato tubers or tapioca and having an amylopectin content typically more than 90 wt.%, preferably of at least 95 wt.%, and preferably at least 98 wt.%, or even at least 99 wt.%, based on dry substance.

Regarding production possibilities and properties, there are significant differences between amylopectin potato starch on the one hand, and the waxy cereal starches on the other hand. This particularly applies to waxy maize starch, which is commercially by far the most important waxy cereal starch. The cultivation of waxy maize, suitable for the production of waxy maize starch is not commercially feasible in countries having a cold or temperate climate, such as The Netherlands, Belgium, England, Germany, Poland, Sweden and Denmark. The climate in these countries, however, is suitable for the cultivation of potatoes. Tapioca starch, obtained from cassava, may be produced in countries having a warm and moist climate, such as is found in regions of South East Asia and South America. The composition and properties of root and tuber starch, such as amylopectin potato starch and amylopectin tapioca starch, differs from those of the waxy cereal starches. Amylopectin potato starch, for example has a much lower content of lipids and proteins than the waxy cereal starches. Problems regarding off taste, odour and foaming, which, because of the lipids and/or proteins, may occur when using waxy cereal starch products (native and modified)., do not occur, or occur to a much lesser degree when using corresponding amylopectin potato starch products.

Furthermore, in contrast to the waxy cereal starches, amylopectin potato starch contains chemically bound phosphate. groups. As a result, amylopectin potato starch products in a dissolved state have a distinct polyelectrolyte character. In the present invention non-cereal amylopectin starch and non-cereal amylopectin starch derivatives are applied in expanded food products. In relation to the same products based on other starches, the products based on non-cereal amylopectin starch show very good expansion properties. In some cases unmodified non-cereal amylopectin starch, such as for example derived from potato, even outperforms traditionally applied modified waxy cereal starch derivatives.

In one embodiment of the present invention unmodified, native non-cereal amylopectin starch, preferably derived from potato, is used in expanded products. The unmodified starch may or may not be pregelatinised by drum drying, spray cooking, spray drying, extrusion or heating in aqueous alcohol. In a further embodiment the application of non-cereal amylopectin starch derivatives in expanded products is provided. The starch derivative may or may not be a cold water swellable derivative obtained using the methods described above.

The starch derivative may be a cross-linked starch, wherein said cross-linking is achieved by using sodium trimetaphospate, phosphorus oxytrichloride or adipic anhydride, using for example a method known in the art. These cross-linking agents are most suitable for use in the food industry but others can also be contemplated.

The starch may be stabilised by treatment with acetic anhydride, vinyl acetate, or comparable agents. The starch may stabilised by hydroxypropylation. Stabilisation by hydroxyalkylation of starch is, for example obtained with reagents containing a halohydrin, or an epoxide group as reactive site. The addition of hydroxypropyl groups is generally performed in aqueous suspensions of starch using propylene oxide, under alkaline conditions. The starch may also be derivatised by a combination of cross-linking and stabilisation. Cross-bonding and/or stabilising reagents are in general reacted with starch under alkaline conditions. Suitable alkali materials are: sodium hydroxide, potassium hydroxide, ammonium hydroxide, magnesium hydroxide, sodium carbonate and trisodiumphosphate. Preferred are the alkali metal hydroxides and carbonates, most preferred are sodium hydroxide and sodium carbonate. Sometimes salts are added as to prevent swelling under alkaline reaction conditions. Preferred are sodium chloride and sodium sulphate.

The invention is further described in the detailed description and the examples therein without limiting the invention.

### Detailed description

### Example 1

### Method for nut coating

### Preparation of dry mix

A mixture is prepared of a native starch, here 400 g native potato starch, and a cold water swellable (pregelatinised) starch, here 200 g cold water swellable adipate acetate based on waxy maize starch. Herewith a dough coating is prepared of:
400 g starch mixture
80 g powdered sugar
10 g salt
10 g glutamate
water

### Processing

Coat 400 g shelled peanuts in an Erweka AR 400 rotating coating pan (30 rpm, inclination of about 30°)

### Pre-coating

During this experiment the nuts are kept rotating. 8 g of water is sprayed on the nuts. The nuts are dusted with a malto dextrin such as AVEBE's Paselli SA 2, Paselli MD 10, Paselli MD6 and again 10 g of water are sprayed on. Immediately afterwards 65 g of coating mix is dusted on the nuts.

### Main coating

The main coating is performed in several steps according to a scheme for example as below.

| step | spray with water (in g) | dust with coating mix (in g) |
|---|---|---|
| 1 | 15 | 25 |
| 2 | 15 | 40 |
| 3 | 20 | 60 |
| 4 | 10 | 40 |
| 5 | 10 | 40 |
| 6 | 20 | 40 |
| 7 | 10 | 50 |
| 8 | 20 | 40 |

### Final coating and processing steps

The nuts are dusted with 15 g of coating mix. Rotating is maintained for about 10 minutes.

### Frying

The coated nuts were fried in oil at 155-160 °C for 5 minutes.

The cooled nuts were evaluated for organoleptic features. The volume of 200 g of coated nuts was measured in 1 L cylinder. The results are summarised in table 1, where example 1 is compared with examples 2 - 4.

### Example 2

In example 2 potato starch was exchanged for amylopectin potato starch. The results are summarised in table 1. Example 3.

Example 3 is a repetition of example 2 except that the cold swellable adipate/acetate based on waxy maize starch has been replaced by a none modified cold swellable waxy maize starch. The results are summarised in table 1.

### Example 4.

Example 4 is a repetition of example 3 except that the cold swellable waxy maize starch has been replaced by a cold swellable amylopectin potato starch. The results are summarised in table 1.

**Table 1.**

| Example nr | native starch | cold swellable starch | | Crisp | Expansion | Volu me ml |
|---|---|---|---|---|---|---|
| | | starch | modification | | | |
| 1 | PS | WMS | Adipate/ acetate | 4 | 6 | 550 |
| 2 | APS | WMS | Adipate/ acetate | 6 | 7 | 620 |
| 3 | APS | WMS | none | 5 | 6 | 520 |
| 4 | APS | APS | none | 8 | 8 | 650 |

Several conclusions can be derived from examples 1 - 4 and Table 1.
- changing the native starch from normal potato starch to amylopectin potato starch improves expansion and crispiness.
- upon changing the cold water swellable starch from modified waxy maize starch to unmodified waxy maize starch expansion and crispiness go down
- changing the cold water swellable starch from unmodified or modified waxy maize to unmodified amylopectin potato starch improves the expansion and crispiness.
- it is possible to avoid the off-taste brought in by the waxy maize starch by replacing it with a non-cereal amylopectin starch.

### Example 5

### Method

A dough was prepared of 14.4 kg of whole potato flakes (Rixona, German flakès), 5.80 kg of pregelatinised potato starch (with a moisture content of 9.3%), small components (0.39 kg of salt, 0.28 kg of sodium bicarbonate, 0.11 kg of citric acid, 0.14 kg of acid sodium pyrophosphate, 0.19 kg of sunflower oil, 0.11 kg lecithin) and 14.5 kg of water. The blend of dry ingredients is mixed for 30 seconds on low speed (52 rpm) in a high speed mixer. Oil and lecithin are added and mixed in for 2 minutes at high speed (104 rpm). Water is added and mixing is continued for 2.5 minutes. The dough is left to rest for 60 minutes. A biscuit line is fed with dough and the thickness of the dough is brought down to 0.6 cm. Round pieces are cut and dockered. The products are baked in a continuous oven with two zones (front: 215 °C, back: 185 °C) for 2.8 minutes.
The final products were evaluated for expansion, hardness in bite and crispiness. The results are summarised in table 2.

### Expansion measurement

The weight of the amount used to fill a 2 1 measuring cylinder with baked snacks was determined. The results were expressed as the volume which is occupied by 200 g.

### Example 6.

In example 6 the instant starch was derived from waxy maize starch. It proved very hard to prepare a workable dough from this starch. The results are summarised in table 2. It show clearly that waxy maize starch induces less expansion in this application.

### Example 7.

In example 7 the instant starch is a medium cross-linked potato starch derivatives. This example clearly shows that regular potato starch derivatives give low expansion values. The product is very hard also, which leads to a low appreciation.

### Example 8.

In example 8 the instant starch is a low cross-bonded (STMP) amylopectin potato starch derivative. The results clearly show that this product has very good expansion characteristics and good crispiness.

### Example 9.

In example 9 the instant starch is a medium cross-bonded amylopectin potato starch adipate/acetate. It can be seen that the food characteristics are still satisfactorily but less than the product from example 8.

### Example 10.

In example 10 the starch derivative dosage is raised 50 % as compared to example. The resulting product has very good characteristics.

### Example 11.

Example 11 is a repetition of example 7 except that a 40 % extra dosage of water has been added. This example shows that it is possible to obtain higher expansion values with regular starch derivatives, although the expansion is still not as high as with amylopectin potato starch derivatives and the final product is harder. A 40 % extra dosage of water is however in most cases not appreciated. When frying follows extrusion the far will deteriorate more rapidly and in other processes more energy has to be applied in order to get the same dry crispy product.

**Table 2.**

| Example nr | 5 | 6 | 7 | 8 | 9 | 10 | 11 |
|---|---|---|---|---|---|---|---|
| instant starch | APS | WMS | PS | APS | APS | APS | PS |
| modification | none | none | crossl. | crossl. | crossl. stab | crossl. stab. | crossl. |
| Level | | | medium | low | medium | medium | medium |
| Reagent | | | STMP | STMP | adip/ac | adip/ac | STMP |
| | | | | | | * | ** |
| Expansion ml | 2410 | 1880 | 1610 | 2530 | 2170 | 2550 | 2100 |
| hardness | 2 | 2 | 4.5 | 2 | 2 | 2 | 3.5 |
| crispiness | 5 | 5 | 1 | 5 | 5 | 5 | 5 |

| | | | | | | | |
|---|---|---|---|---|---|---|---|
| STMP= sodium trimetaphosphate, adip/ac = adipate/acetate *= 1,5 fold dosage of starch, | | | | | | | |
| **= 40 % extra water dosage | | | | | | | |

## Claims

1. A method for obtaining an expanded foodstuff having improved expansion characteristics, comprising the preparation of a composition at least comprising a non-cereal amylopectin starch, wherein said starch has an amylopectin content of at least 90 weight percent based upon dry substance, heating at least part of said composition to a temperature above its glass transition temperature and letting it cool to a temperature below said glass transition temperature.

2. A method according to claim 1, wherein said composition is a dough.

3. A method according to anyone of claims 1 or 2, wherein said starch is derived from a potato.

4. A method according to claim 3, wherein said starch has an amylopectin content of at least 95 weight percent based on dry substance.

5. A method according to anyone of the preceding claims, wherein said starch is cross-linked.

6. A method according to anyone of the preceding claims, wherein said starch is stabilised.

7. An expanded foodstuff at least comprising a non-cereal amylopectin starch, wherein said starch has an amylopectin content of at least 90 weight percent based on dry substance.

8. An expanded foodstuff according to claim 7,wherein said starch is derived from a potato.

9. An expanded foodstuff according to claim 7 or 8, wherein said starch has an amylopectin content of at least 95 weight percent based on dry substance.

10. An expanded foodstuff according to anyone of claims 7-9, wherein said starch is cross-linked.

11. An expanded foodstuff according to anyone of claims 7-10, wherein said starch is stabilised.

12. An expanded foodstuff according to anyone of claims 7-11, wherein said foodstuff is a snack.

13. An expanded foodstuff according to anyone of claims 7-12, wherein said foodstuff comprises a coating.

14. Use of a non-cereal amylopectin starch for the preparation of an expanded foodstuff, wherein said starch has an amylopectin content of at least 90 weight percent based on dry substance.

## Patentansprüche

1. Verfahren zur Gewinnung eines expandierten Lebensmittels mit verbesserten Expansionseigenschaften, umfassend die Herstellung einer Zusammensetzung, die wenigstens eine Nichtgetreide-Amylopektinstärke umfasst, wobei die Stärke einen Amylopektingehalt von wenigstens 90 Gew.-% hat, bezogen auf die Trockensubstanz, das Erhitzen wenigstens eines Teils der Zusammensetzung auf eine Temperatur oberhalb ihrer Glasübergangstemperatur und das Abkühlenlassen auf eine Temperatur unterhalb ihrer Glasübergangstemperatur.

2. Verfahren gemäß Anspruch 1, wobei die Zusammensetzung ein Teig ist.

3. Verfahren gemäß einem der Ansprüche 1 oder 2, wobei die Stärke aus einer Kartoffel stammt.

4. Verfahren gemäß Anspruch 3, wobei die Stärke einen Amylopektingehalt von wenigstens 95 Gew.-% hat, bezogen auf die Trockensubstanz.

5. Verfahren gemäß einem der vorstehenden Ansprüche, wobei die Stärke vernetzt ist.

6. Verfahren gemäß einem der vorstehenden Ansprüche, wobei die Stärke stabilisiert ist.

7. Expandiertes Lebensmittel, das wenigstens eine Nichtgetreide-Amylopectinstärke umfasst, wobei die Stärke einen Amylopektingehalt von wenigstens 90 Gew.-% hat, bezogen auf die Trockensubstanz.

8. Expandiertes Lebensmittel gemäß Anspruch 7, wobei die Stärke aus einer Kartoffel stammt.

9. Expandiertes Lebensmittel gemäß Anspruch 7 oder 8, wobei die Stärke einen Amylopektingehalt von wenigstens 95 Gew.-% hat, bezogen auf die Trockensubstanz.

10. Expandiertes Lebensmittel gemäß einem der Ansprüche 7 bis 9, wobei die Stärke vernetzt ist.

11. Expandiertes Lebensmittel gemäß einem der Ansprüche 7 bis 10, wobei die Stärke stabilisiert ist.

12. Expandiertes Lebensmittel gemäß einem der Ansprüche 7 bis 11, wobei das Lebensmittel ein Knabberzeug ist.

13. Expandiertes Lebensmittel gemäß einem der Ansprüche 7 bis 12, wobei das Lebensmittel eine Beschichtung umfasst.

14. Verwendung einer Nichtgetrelde-Amylopektinstärke für die Herstellung eines expandierten Lebensmittels, wobei die Stärke einen Amylopektingehalt von wenigstens 90 Gew.-% hat, bezogen auf die Trockensubstanz.

## Revendications

1. Méthode pour obtenir un produit alimentaire expansé ayant des caractéristiques d'expansion améliorées, comprenant le fait de préparer une composition comprenant au moins un amidon d'amylopectine non céréalier, ledit amidon ayant une teneur en amylopectine d'au moins 90 % en poids par rapport à la substance sèche, de chauffer au moins une partie de ladite composition à une température supérieure à sa température de transition vitreuse et de la laisser refroidir jusqu'à une température inférieure à ladite température de transition vitreuse.

2. Méthode selon la revendication 1, dans laquelle ladite composition est une pâte.

3. Méthode selon l'une quelconque des revendications 1 ou 2, dans laquelle ledit amidon est dérivé de pomme de terre.

4. Méthode selon la revendication 3, dans laquelle ledit amidon a une teneur en amylopectine d'au moins 95 % en poids par rapport à la substance sèche.

5. Méthode selon l'une quelconque des revendications précédentes, dans laquelle ledit amidon est réticulé.

6. Méthode selon l'une quelconque des revendications précédentes, dans laquelle ledit amidon est stabilisé.

7. Produit alimentaire expansé comprenant au moins un amidon d'amylopectine non céréalier, dans laquelle ledit amidon a une teneur en amylopectine d'au moins 90 % en poids par rapport à la substance sèche.

8. Produit alimentaire expansé selon la revendication 7, dans lequel ledit amidon est dérivé de pomme de terre.

9. Produit alimentaire expansé selon la revendication 7 ou 8, dans lequel ledit amidon a une teneur en amylopectine d'au moins 95 % en poids par rapport à la substance sèche.

10. Produit alimentaire expansé l'une quelconque des revendications 7 à 9, dans lequel ledit amidon est réticulé.

11. Produit alimentaire expansé l'une quelconque des revendications 7 à 10, dans lequel, dans laquelle ledit amidon est stabilisé.

12. Produit alimentaire expansé selon l'une quelconque des revendications 7 à 11, ledit produit alimentaire étant un en-cas.

13. Produit alimentaire expansé selon l'une quelconque des revendications 7 à 12, ledit produit alimentaire comprenant un enrobage.

14. Utilisation d'un amidon d'amylopectine non céréalier pour la préparation d'un produit alimentaire expansé, dans laquelle ledit amidon a une teneur en amylopeptine d'au moins 90 % en poids par rapport à la substance sèche.
